## Europäisches Patentamt
## European Patent Office
## Office européen des brevets

(19)

(11) Numéro de publication: **0 131 483**

**B1**

(12)
# FASCICULE DE BREVET EUROPÉEN

(45) Date de publication du fascicule du brevet:
**04.11.87**

(51) Int. Cl.⁴: **B 29 C 41/28,** B 29 C 47/00 // B29L7/00

(21) Numéro de dépôt: **84401073.6**

(22) Date de dépôt: **24.05.84**

(54) **Procédé et dispositif pour la fabrication de feuilles de matière plastique de bonne qualité optique, par coulée.**

(30) Priorité: **30.05.83 FR 8308904**

(43) Date de publication de la demande:
**16.01.85 Bulletin 85/3**

(45) Mention de la délivrance du brevet:
**04.11.87 Bulletin 87/45**

(84) Etats contractants désignés:
**BE DE FR GB IT**

(56) Documents cité:
**EP-A-0 038 760**
**FR-A-706 399**
**FR-A-1 274 690**

(73) Titulaire: **SAINT- GOBAIN VITRAGE, Les Miroirs 18, avenue d'Alsace, F-92400 Courbevoie (FR)**

(72) Inventeur: **Petitcollin, Jean- Marc, 12 rue de Verdun, F-60150 Le Plessis Brin (FR)**
Inventeur: **Jaworski, André, 699 rue de la Mairie, F-60170 Cambrunne les Ribecourt (FR)**

(74) Mandataire: **Muller, René, SAINT- GOBAIN RECHERCHE 39, quai Lucien Lefranc, F-93304 Aubervilliers (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à la fabrication de films ou de feuilles de bonne qualité optique de surface formés d'une ou plusieurs couches de matières plastiques, par apport d'au moins une masse liquide telle une solution ou un mélange réactionnel sur un support en déplacement relatif continu par rapport à l'apport. Plus particulièrement, l'invention concerne un procédé et un dispositif pour la fabrication susdite.

Le terme "feuille", utilisé par la suite, désignera aussi bien un film mince formé d'une couche unique de matière plastique qu'une feuille de longueur indéterminée, formée d'une ou plusieurs couches de matières plastiques.

La publication EP-A-0 038 760 décrit un procédé et un dispositif pour la fabrication d'une feuille de matière plastique de haute qualité optique de surface selon les péambules des revendications 1 et 7. La fabrication est réalisée sur un support souple, tendu, en matière plastique dont la surface a été déplissée et rendue parfaitement lisse au préalable, ce support étant délivré en continu à partir de bobines magasins, et défilant sur une table fixe placée au moins à l'emplacement où la masse lipuide est apportée.

Le ruban souple tendu doit être maintenu plan en permanence. A cet effet, dans une réalisation du procédé et du dispositif pour sa mise en oeuvre, le défilement du ruban souple tendu s'effectue au-dessus d'une succession de feuilles de verre formant une sole continue et procurant une surface plane, permanente au ruban tendu. Ce défilement sur une surface plane présente des inconvénients car il s'effectue avec des frottements importants qui sont créateurs de charges électrostatiques sur le verre et le ruban tendu. Ces charges électrostatiques attirent des poussières et autres particules notamment entre la sole en verre et le ruban tendu, qui peuvent provoquer des impressions sur la couche coulée d'où des défauts optiques, et aussi des risques de déchirures du ruban tendu. Des pousières ou particules peuvent aussi être attirées sur la surface de ruban tendu à recouvrir par la couche coulée et se trouver par la suite incrustées dans ladite couche coulée.

Pour limiter les frottements décrits ci-dessus, il a été proposé dans une variante décrite dans cette même publication, de remplacer les feuilles de verre formant la sole fixe par une pluralité de fils métalliques tendu transversalement par rapport au défilement du ruban souple. Ce système présente également des inconvénients : il n'offre pas un support parfaitement plan et en outre des poussières peuvent rester bloquées par les fils. Il s'ensuit des défauts optiques sous forme de lignage sur le film formé.

L'invention obvie à ces inconvénients. Elle propose un procédé et un dispositif pour l'apport d'une masse liquide propre à former les feuilles de matière plastique sur un ruban souple tendu dont la surface a été déplissée au préalable, présentant une surface plane permanente, qui se déplace quasiment sans frottement donc sans risque de créer des charges électrostatiques nuisibles.

Le procédé selon l'invention est caractérisé en ce que le ruban souple défile sur deux supports rectilignes, horizontaux et longitudinaux, dont le contact de chacun d'eux avec le ruban souple est limité sensiblement à une génératrice, ces deux supports rectilignes s'étendant sur toute la longueur utile pour la fabrication et étant placés le long des bords latéraux du ruban, ce ruban étant tendu transversalement sur ces deux supports rectilignes comme une peau de tambour. Le ruban est tendu longitudinalement, de façon connue par exemple par l'action de deux rouleaux disposés aux extrémités de la ligne de coulée.

Les deux surports rectilignes utilisés dans le cadre de l'invention peuvent être tous moyens permettant la tension du ruban souple comme une peau de tambour, et avec lesquels les frottements dus au déplacement du ruban sont négligeables. Ils peuvent être deux éléments cylindriques, de préférence deux cables métalliques ou d'autres matières équivalentes telles du nylon.

Dans une réalisation avantageuse du procédé, à l'emplacement de la ou ces coulées, le ruban souple tendu défile sur un support plan étroit dans le sens du défilement du ruban souple, tel une table étroite, les deux supports longitudinaux ne jouant plus leur rôle de support du film à cet ou ces emplacements. En effet, lorsque la coulée de la masse liquide s'effectue de la manière décrite dans FR-A-2 347 170 et FR-A-2 442 128 avec formation d'un bourrelet de matière à l'emplacement de la coulée, le poids du bourrelet de matière risque de provoquer un affaissement du ruban.

Cet affaissement est évité par un support plan par exemple une table rigide telle une feuille métallique ou en verre, ce support étant de préférence relativement étroit dans la dimension de la ligne de coulée pour ne pas créer de frottements importants comme indiqué précédemment. Dans une variante, le support plan peut être constitué d'une bande sans fin de faible longueur avançant à sensiblement la même vitesse de défilement que celles du ruban.

La matière formant le ruban souple tendu est celle décrite dans EP-A-0 038 760 déjà cité. C'est notamment un téréphtalate de polyéthylèneglycol.

La matière plastique pouvant être coulée sur le ruban souple tendu est également par exemple celle décrite dans la publication du brevet européen cité ci-dessus.

La masse liquide apportée selon le procédé, notamment par coulée, peut-être formée de solutions ou dispersions organiques et/ou aqueuses de monomères, prépolymères ou polymères, ou encore ces produits purs ou en mélange, susceptibles de fournir une feuille de bonne qualité optique.

La masse liquide apportée peut être plus ou moins visqueuse. Elle peut contenir divers additifs tels des agents d'étalement, des primaires d'adhésion, des agents anti-UV, des anti-oxydants, des colorants ...

Le procédé s'applique donc à la fabrication de feuilles de matière plastique très diverses de bonne qualité optique de surface, et avec avantage, à la fabrication de feuilles utilisées dans les vitrages feuilletés, feuilles formées essentiellement d'au moins une couche de polyuréthane, par exemple à la fabrication d'une feuille comprenant une couche de polyuréthane thermodurcissable autocicatrisable : sur une telle couche les impressions locales disparaissent spontanément, après un court laps de temps, de l'ordre de quelques minutes, cette vitesse de disparition étant fonction de la nature de l'impression et de la température de la matière plastique. En même temps, cette couche est antilacérante, c'est-à-dire qu'en cas de bris d'un vitrage en verre, la couche recouvre les arêtes vives du verre et protège la face, les yeux ou d'autres parties du corps des passagers d'un véhicule par exemple, ou encore, lorsqu'il s'agit de lunettes de sécurité, la couche de protection peut éviter le contact des arêtes vives avec les yeux.

Il s'applique à la fabrication d'une couche de polyuréthane thermoplastique capable d'adhérer à un support en verre ou en matière plastique.

Il s'applique à la fabrication d'une feuille composite comme celle décrite dans FR-A-2 398 606, comprenant une couche antilacérante et autocicatrisable de polyuréthane thermodurcissable et une couche adhésive de polyuréthane thermoplastique.

Selon le procédé de l'invention, pour fabriquer une telle feuille à plusieurs couches, on forme sur le support souple tendu en matière plastique déplissé et rendu parfaitement lisse au préalable par chauffage, revêtu le cas échéant d'un agent de séparation, une première couche, qui peut-être une couche de polyuréthane thermodurcissable, par coulée des composants réactionnels, puis sur la première couche polymérisée au moins partiellement, on forme la couche de polyuréthane thermoplastique par coulée d'une solution de ce polyuréthane, et évaporation du ou des solvants.

On peut encore procéder de la façon inverse en formant par coulée sur le support souple tendu une première couche de polyuréthane thermoplastique, puis une deuxième couche de polyuréthane thermodurcissable.

L'invention s'applique d'une manière générale à la fabrication des feuilles de matières plastiques décrites dans EP-A-0 038 760 cité précédemment.

L'invention concerne également un dispositif constituant une ligne de coulée pour la fabrication d'une feuille de matière plastique mono ou multicouche de bonne qualité optique de surface sur un support horizontal souple, tendu, rendu parfaitement lisse au préalable.

La dispositif selon l'invention, est caractérisé en ce que les moyens pour tendre transversalement le ruban souple comprennent deux supports rectilignes horizontaux et longitudinaux, notamment deux câbles, dont le contact avec le ruban souple est limité sensiblement à une génératrice, ces deux supports s'étendant sur toute la longueur utile pour la fabrication, les deux support rectilignes étant disposés le long des bords latéraux du ruban et des moyens qui associés à ces supports rectilignes tendent le ruban comme une peau de tambour entre ces deux supports.

La ligne de coulée comprend un distributeur d'un ruban en matière souple, notamment en téréphtalate de polyethylèreglycol, de faible épaisseur pouvant être tendu pour former un support plan. Le dispositif comporte également des moyens pour déplisser et lisser par exemple par chauffage, le ruban avant la coulée, des moyens pour déposer en au moins un endroit la masse liquide sur le ruban, des moyens de chauffage permettant la solidification de la masse liquide par polymérisation des composants et/ou évaporation des produits volatils tels des solvants.

Dans une forme préférée du dispositif celui-ci comprend également des moyens supportant horizontalement le ruban sur la largeur utile, à chaque emplacement où la masse liquide est apportée, ces moyens étant par exemple une plaque métallique ou une feuille de verre. A cet ou ces emplacements, l'action de support du ruban par les deux supports rectilignes longitudinaux est escamotée.

Les moyens exerçant des efforts de traction transversalement sont dans une réalisation du dispositif des couples de roulettes de bords qui disposés à un niveau inférieur de l'ordre de quelques millimètres de celui de la génératrice supérieure des deux câbles longitudinaux, et qui sont inclinées par rapport à l'axe de défilement du ruban, viennent pincer les bords du ruban et exercer sur lui des forces à composantes latérales vers l'extérieur en même temps qu'ils l'applique sur les deux câbles longitudinaux pour le tendre comme une peau de tambour.

Les deux câbles longitudinaux présentent un diamètre avantageusement d'au moins 3 mm. Dans une forme préférée leur diamètre est d'environ 6 mm.

Les deux supports rectilignes, ou câbles, peuvent être maintenus horizontalement par tous moyens adaptés. Avantageusement ils sont maintenus par une succession de feuilles de verre constituant une sole fixe qui simultanément forme un écran inférieur contre les possières et peut régulariser les températures du ruban souple et de la couche formée.

D'autres avantages et caractéristiques de l'invention apparaîtront par la suite dans la description d'un exemple de réalisation de dispositif.

La figure 1 représante schématiquement une ligne de coulée utilisée pour la fabrication d'une feuille de matière plastique à une couche.

La figure 2 représente en vue de plan une partie de la ligne de la figure 1.

La figure 3 représente une section transversale de la ligne à un emplacement où le ruban repose sur deux câbles longitudinaux.

La figure 4 représente un détail de la figure 3.

La figure 5 représente une section transversale de la ligne à l'emplacement de la coulée.

La figure 6 représente un détail de la figure 5.

La figure 7 représente un couple de roulettes de bord.

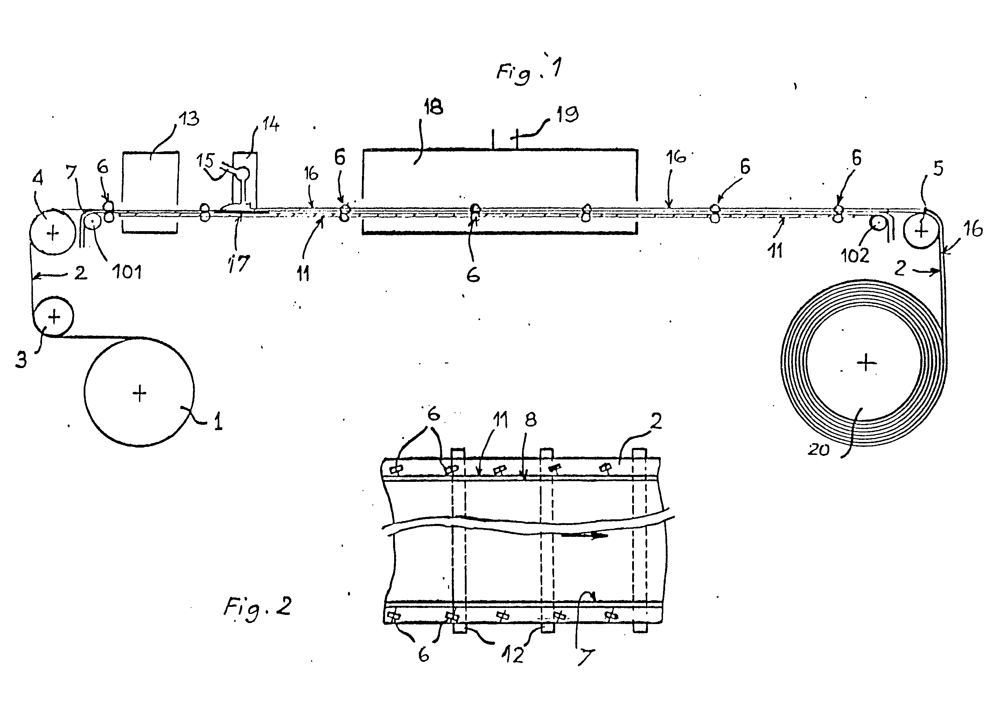

Comme représanté sur les figures 1 et 2, la ligne de coulée comprend une bobine 1 d'alimentation d'un ruban 2 d'environ 1,30 mètre de large et d'environ 0,03 mm d'épaisseer en téréphtalate de polyéthylèneglycol, par exemple le produit commercialisé sous l'appellation "Terphane" par la société RHONE POULENC, ou encore le produit commercialisé sous l'appellation "Mylar" par la société DUPONT DE NEMOURS.

Après passage autour des rouleaux de renvoi 3, 4 faisant également office, le cas échéant, de rouleaux de déplissage pour les plis larges, le ruban subit de la part d'un rouleau tracteur 5 situé en bout de ligne de fabrication une traction longitudinale qui le tend et le fait avancer à vitesse uniforme. Disposés régulièrement de chaque côté du ruban, des couples da roulettes 6, inclinées par rapport à la direction d'avance du ruban, viennent pincer les bords dedit ruban et exercer sur lui des forces à composantes latérales vers l'extérieur. Ces ruelettes décrites plus en détail par la suite, appliquent le ruban sur deux cables longitudinaux 7 et 8 de 6 mm de diamètre s'étendant sur toute la longeur utile de la ligne, disposés horizontalement, à un niveau tel que leur génératrice supérieure est située à environ 6 mm au-dassus du plan de pincement P des roulettes de bord. Les deux cêbles sont maintenus horizontaux en étant supportés par des plaques de verre formant une sole fixe horizontale 11, elles-mêmes supportées par des rouleaux transversaux 12, portés par un bâti non représenté. Les deux câbles 7 et 8 sont disposés de chaque côté à une distance d'environ 8 cm des ruelettes de bord. Ils sont tendus longitudinalement entre deux rouleaux 101 et 102. Les roulettes, associées aux deux câbles longitudinaux tendent le ruban souple comme une peau de tambour, dans un plan horizontal.

Dans la partie amont de la ligne de coulée, le ruban passe à travers une enceinte 13 équipée de résistances électriques qui chauffent le ruban afin d'affiner son déplissage et d'obtenir une surface lisse.

En aval de l'enceinte chauffante et au-dessus du ruban, une tête de coulée 14 à large fente mince sert à déverser de façon régulière et contrôlée la matière liquide 15 propre à former la feuille de matière plastique 16. Une tête de coulée convenable est par exemple celle décrite dans FR-A-2 347 170.

A l'aplomb de la tête de coulée, sous le ruban, une plaque horizontale 17 en verre ou en acier inoxydable par exemple d'épaisseur sensiblement égale au diamètre des deux câbles longitudinaux supporte le ruban en étant disposée sur le sole fixe 11. Cette plaque s'étend sur essentiellement toute la largeur de la ligne entre les deux câbles longitudinaux 7 et 8. Elle est suffissmment étroite dans le sens de défilement de ruban pour ne pas être la cause de frottements importants.

En aval de la tête de coulée, le ruban 2 passe à travers une enceinte chauffée 18 ou pour de séchage, dont le rôle est d'élver la température de la couche coulée pour la solidifier soit par évaporation de liquides volatils, s'échappant par un conduit d'aspiration 19, soit par polymérisation des compoasnts coulés en cas de coulée réactive.

En bout de la ligne de fabrication, le dispositif comprend un rouleau 20 autour duquel s'enroule l'ensemble constitué de la feuille de matière plastique 16 qui vient d'être formée et le ruban 2 ayant fait office de support.

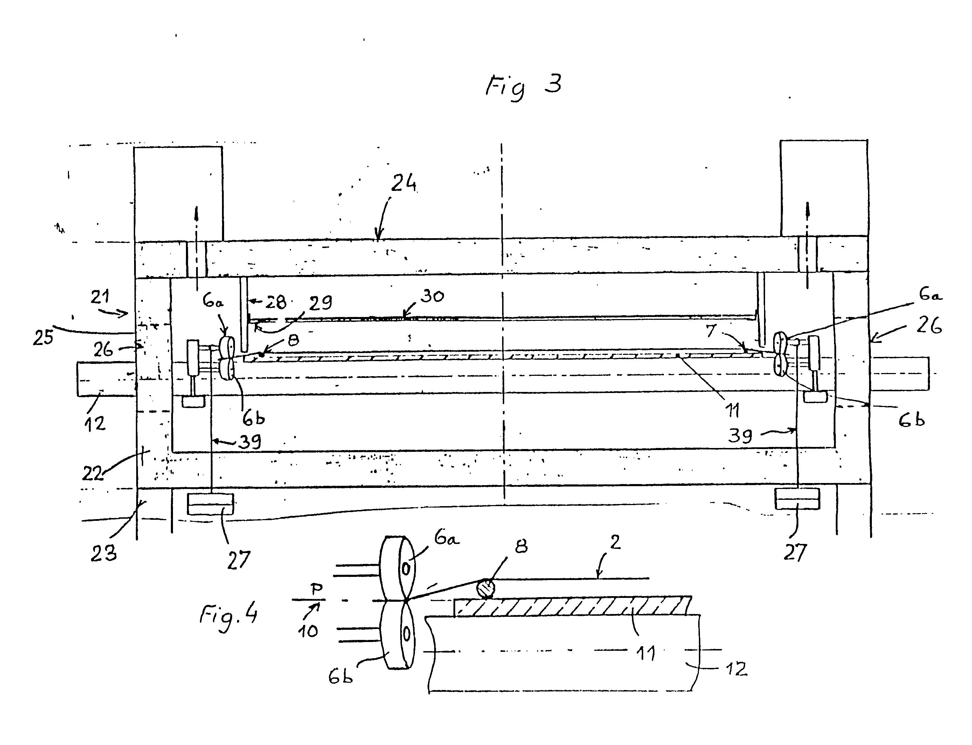

Les figures 3 et 4 représentent une saction d'un four de séchage ou polymérisation 18. Ce four est formé d'une succession de caissons 21 comprenant chacun une partie inférieure 22 reposant sur la bâti 23 et una partie supérieure 24 pouvant être séparée de la partie inférieure afin de permettre l'accès au ruban le cas échéant.

Les caissons 21 formés d'une double paroi en tôle 25 garnie d'isolant présentent des ouverteres latérales 26 pour le passage des rouleaux 12 supportant les plaques de verre portant elles-mêmes les deux câbles longitudinaux 7 et 8 ser lesquels est tendu le ruban transversalement. Ces ouvertures 26 permettent généralement d'accéder aux roulettes de bords parmettant ainsi leur réglage. Les roulettes pincent les bords du ruban souple à environ deux centimètres des extrémités dudit ruban. La roulette supérieure 6a est appliqée sur le ruban par l'action de contrepoids 27. Au-dessus du ruban, le caisson comprend des cloisons verticales 28 qui supportent par l'intermédiaire de cornières 29, des plaques de verre supérieures 30 formant une voûte de protection du ruban et des couches formées ou en formation, contre les poussières.

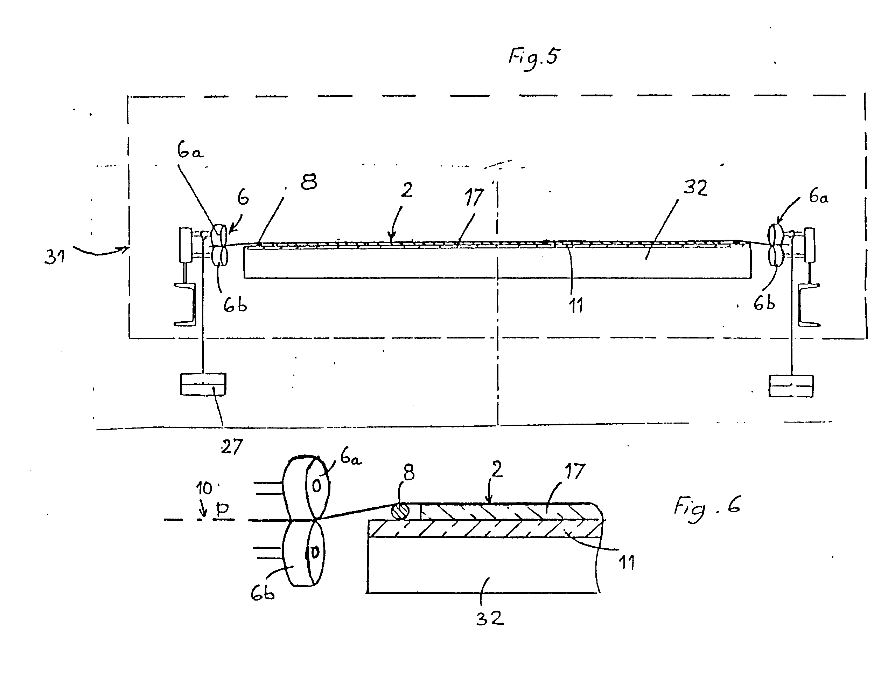

Les figures 5 et 6 représentent le dispositif dans une section transversale à l'emplacement de la cabine de coulée 31. A cet emplacement, une feuille 17 de verre ou en métal, de 6 mm d'épaisseur environ, est placée sur la sole fixe 11 et c'est elle qui supporte le ruban 2 à cet emplacement en supplantant l'action des deux câbles longitudinaux 7 et 8. A cet emplacement les rouleaux 12 porteurs de la sole fixe 11 sont avantageusement remplacés par un support métallique chauffant 32 afin d'obtenir une meilleure régulation du support de coulée.

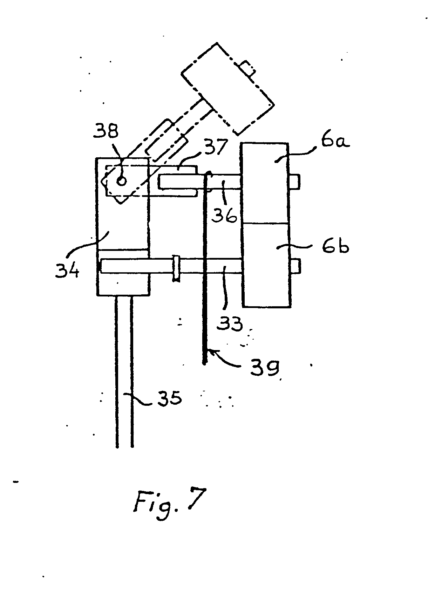

La figure 7 représente un couple de roulettes de bord 6. Ces roulettes, en caoutchouc, montées sur roulement à billes autour d'axes fixes, ont un diamètre d'environ 3 centimètres et une largeur d'environ 1 centimètre. L'axe 33 de la roulette inférieure 6b est fixé sur le corp principal 34 surmontant une tige filetée 35 permettant la réglage en hauteur et en inclinaison par rapport à l'axe du défilement de ruban. L'axe 36 de la roulette supérieure 6a est fixé sur une pièce 37 pivotant autour d'un axe horizontal 38. En position de travail, les deux axes 33 et 36 sont parallèles. La roulette supérieure est représentée en traits mixtes dans une position intermédiaire entre la position de travail et celle de repos. Un fil 39 au bout dequel est fixé un contrepoids 27 non représenté sur cette figure, est lié à l'axe 36. La valeur de contrepoids 27 fixe la force de pincemant de ruban entre les roulettes.

## Revendications

1. Procédé de fabrication de feuilles de matière plastique de haute qualité optique de surface, par apport d'une masse liquide (15) propre à former les feuilles de matière plastique sur un support plan mobile constitué d'un ruban souple (2) déplissé au préalable et tendu longitudinalement et transversalement, caractérisé en ce que le ruban souple (2) défile sur deux supports rectilignes (7, 8), horizontaux et longitudinaux, dont le contact de chacun d'eux avec le ruban souple (2) est limité sensiblement à une génératrice, ces deux supports rectilignes (7, 8) s'étendant sur toute la longueur utile pour la fabrication et étant placés le long des bords latéraux du ruban (2), ce dernier étant tendu transversalement sur ces deux supports rectilignes (7, 8) comme une peau de tambour.

2. Procédé selon la revendication 1, caractérisé en ce que les deux supports rectilignes (7, 8) sont des câbles.

3. Procédé selon une des revendications 1 ou 2, caractérisé en ce que à l'emplacement de l'apport de la masse liquide (15) le ruban (2) défile sur un plan étant étroit (17) si considéré dans le sens de défilement du ruban souple.

4. Procédé selon la revendication 3, caractérisé en ce que le plan étroit (17) est une table fixe étroite.

5. Procédé selon la revendication 3, caractérisé en ce que le plan étroit (17) est une bande sans fin avançant à la vitesse de défilement du support.

6. Procédé selon une des revendications 1 à 5, caractérisé en ce que le ruban souple tendu est choisi parmi le téréphtalate de polyéthyléneglycol et la cellulose régénérée.

7. Dispositif pour la fabrication d'une feuille de matière plastique de haute qualité optique de surface comprenant un support plan mobile, constitué d'un ruban souple (2) tendu, des moyens (14) pour l'apport d'une masse liquide (15) propre à former la feuille de matière plastique sur le support plan mobile, des moyens (5, 6) pour tendre longitudinalement et transversalement le ruban souple, caractérisé en ce que les moyens pour tendre transversalement comprennent deux supports (7, 8) rectilignes horizontaux et longitudinaux, notamment deux câbles, dont le contact avec le ruban souple (2) est limité sensiblement à une génératrice, ces deux supports (7, 8) s'étendant sur toute la longueur utile pour la fabrication, les deux supports rectilignes étant placés le long des bords latéraux du ruban (2), et des moyens (6) qui associés aux deux supports rectilignes tendent le ruban comme une peau de tambour.

8. Dispositif selon la revendication 7, caractérisé en ce qu'il comprend à l'emplacement de la coulée un support (17) plan étant étroit si considéré dans le sens de défilement du ruban souple, pour le ruban souple (2) tendu.

9. Dispositif selon une des revendications 6 ou 8, caractérisé en ce que les câbles longitudinaux (7, 8) présentent un diamètre d'au moins 3 mm.

10. Dispositif selon la revendication 9, caractérisé en ce que les câbles (7, 8) présentent un diamètre d'environ 6 mm.

11. Dispositif selon une des revendications 7 à 10, caractérisé en ce que les moyens (6) associés aux câbles qui tendent le ruban comme une peau de tambour sont des couples de roulettes (6a, 6b) inclinées par rapport à l'axe de défilement du ruban (2) qui pincent les bords du ruban à un niveau légerèment inférieur à celui de la génératrice supérieure des câbles (7, 8).

12. Dispositif selon une des revendications 7 à 11, caractérisé en ce que les deux supports rectilignes ou cables (7, 8), sont portés par une sole fixe (11) horizontale.

## Patentansprüche

1. Verfahren zur Herstellung von Kunststoffolien mit mit hoher optischer Oberflächenqualität durch Aufbringen einer flüssigen, zur Bildung von Kunststoffolien geeigneten Masse (15) auf einen ebenen beweglichen Träger, der von einem biegsamen, zuvor geglätteten und in Längs- und Querrichtung gespannten Band (2) gebildet ist, dadurch gekennzeichnet, daß das biegsame Band (2) auf zwei geradlinigen, horizontalen und längsverlaufenden Stützgliedern (7, 8) läuft, deren Kontakt mit dem biegsamen Band (2) im wesentlichen auf eine Erzeugende begrenzt ist, daß die beiden geradlinien Stützglieder (7, 8) sich über die gesamte für die Fertigung nutzbare Länge erstrecken sowie längs der seitlichen Ränder des Bandes (2) angeordnet sind, welches wie ein Trommelfell auf diesen geradlinigen Stützgliedern (7, 8) in Querrichtung gespannt ist.

2. Verfahren nach Anspruch 1, dadurch gekennzeichnet, daß die beiden geradlinigen Stützglieder (7, 8) durch Kabel gebildet sind.

3. Verfahren nach einem der Ansprüche 1 oder 2, dadurch gekennzeichnet, daß das Band (2) am Ort des Aufbringens der flüssigen Hasse (15) auf einer Ebene (17) abläuft, die in Bewegungsrichtung des biegsamen Bandes schmal ausgebildet ist.

4. Verfahren nach Anspruch 3,
dadurch gekennzeichnet daß die schmale Ebene (17) durch einen fest angeordneten Tisch gebildet ist.

5. Verfahren nach Anspruch 3,
dadurch gekennzeichnet, daß die schmale Ebene (17) durch ein Endlosband gebildet ist, welches mit der Geschwindigkeit des Trägers läuft.

6. Verfahren nach einem der Ansprüche 1 bis 5,
dadurch gekennzeichnet, daß das gespannte biegsame Band ausgewählt ist aus einem Polyäthylenglykolterephtalat und Regeneratzellulose.

7. Vorrichtung zur Herstellung einer Kunststoffolie mit hoher optischer Oberflächenqualität, mit einem ebenen beweglichen Träger, der von einem gespannten biegsamen Band (2) gebildet ist, einer Einrichtung (14) zum Aufbringen einer flüssigen, zur Bildung der Kunststoffolie geeigneten Masse auf den ebenen beweglichen Träger, sowie mit einer Einrichtung (5, 6) zum Spannen des biegsamen Bandes in Längs- und in Querrichtung,
dadurch gekennzeichnet, daß die Einrichtung zum Spannen des Bandes in Querrichtung zwei geradlinige, horizontale und längsverlaufende Stützglieder (7, 8), insbesondere Kabel, aufweist, deren Kontakt mit dem biegsamen Band (2) im wesentlichen auf eine Erzeugende begrenzt ist, daß die beiden Stützglieder (7, 8) sich über die gesamte für die Herstellung nutzbare Länge erstrecken, sowie längs der seitlichen Ränder des Bandes (2) angeordnet sind, und daß die Einrichtung (6), die den beiden Stützgliedern zugeordnet ist, das Band wie ein Trommelfell spannt.

8. Vorrichtung nach Anspruch 7,
dadurch gekennzeichnet, daß die Vorrichtung am Aufgießort eine ebene Stütze (17) für das gespannte biegsame Band (2) aufweist, die in Richtung des Vorbeilaufes des biegsamen Bandes schmal ausgebildet ist.

9. Vorrichtung nach einem der Ansprüche 7 oder 8,
dadurch gekennzeichnet, daß die längsverlaufenden Kabel (7, 8) einen Durchmesser von wenigstens 3 mm aufweisen.

10. Vorrichtung nach Anspruch 9,
dadurch gekennzeichnet, daß die Kabel (7, 8) einen Durchmesser von etwa 6 mm aufweisen.

11. Vorrichtung nach einem der Ansprüche 7 bis 10,
dadurch gekennzeichnet, daß die den Kabeln beigeordnete Einrichtung (6) die das Band wie ein Trommelfell spannt, durch Paare von Rollen (6a, 6b) gebildet ist, die bezüglich der Bewegungsachse des Bandes (2) geneigt angeordnet sind und die Ränder des Bandes auf einem Niveau etwas unterhalb dem der oberen Erzeugenden der Kabeln (7, 8) einklemmen.

12. Vorrichtung nach einem der Ansprüche 7 bis 11,
dadurch gekennzeichnet, daß die beiden geradlinigen Stützglieder oder Kabeln (7, 8) auf einem festen horizontalen Unterbau (11) getragen sind.

**Claims**

1. A method of making sheets of plastics material of high optical surface quality, by delivering a liquid mass (15) capable of forming sheets of plastics material onto a flat, movable support comprising a flexible ribbon (2) which is first uncreased and stretched longitudinally and transversely, characterised in that the flexible ribbon (2) passes over two horizontal and longitudinal rectilinear supports (7, 8), contact of each of which with the flexible ribbon (2) being limited substantially to a generatrix, the two rectilinear supports (7, 8) extending over the whole length used for making the sheets and being situated along the lateral edges of the ribbon (2), the latter being stretched transversely on the two rectilinear supports (7, 8) in the manner of a drumskin.

2. A method according to claim 1, characterised in that the two rectilinear supports (7, 8) are cables.

3. A method according to claim 1 or 2, characterised in that at the location of delivery of the liquid mass (15) the ribbon passes over a plane (17) which is narrow when considered in the direction of motion of the flexible ribbon.

4. A method according to claim 3, characterised in that the narrow plane (17) is a narrow fixed table.

5. A method according to claim 3, characterised in that the narrow plane (17) is an endless belt advancing at the speed of motion of the support.

6. A method according to any one of claims 1 to 5, characterised in that the stretched flexible ribbon is selected from polyethyleneglycol terephthalate and regenerated cellulose.

7. Device for making a sheet of plastics material of high optical surface quality comprising a planar movable surface, formed of a stretched flexible ribbon (2), means (14) for delivering a liquid mass (15) capable of forming the sheet of plastics material on the movable planar support, and means (5, 6) for longitudinally and transversely stretching the flexible ribbon, characterised in that the means for stretching transversely comprise two horizontal longitudinal rectilinear supports (7, 8), such as two cables, contact of which with the flexible ribbon (2) is limited substantially to a generatrix, the two supports (7, 8) over the whole length used for making the sheets, the two rectilinear supports being positioned along the lateral edges of the ribbon (2), and means (6) which, associated with the two rectilinear supports, stretch the ribbon in the manner of a drumskin.

8. Device according to claim 7, characterised in that it comprises, at the location of casting, a plan support (17), which is narrow when considered in the direction of motion of the flexible ribbon, for the stretched flexible ribbon (2).

9. Device according to claim 7 or 8, characterised in that the longitudinal cables (7, 8) have a diameter of at least 3 mm.

10. Device according to claim 9, characterised in that the cables (7, 8) have a diameter of about 6 mm.

11. Device according to any one of claims 7 to 10, characterised in that the means (6) associated with the cables which stretch the ribbon in the manner of a drumskin are pairs of rollers (6a, 6b) which are inclined relative to the axis of movement of the ribbon (2) which grip the ribbon edges at a height slightly lower than that of the upper generatrix of the cables (7, 8).

12. Device according to one of claims 7 to 11, characterised in that the two rectilinear supports or cables (7, 8) are carried by a fixed horizontal base (11).

Fig. 1

Fig. 2

0 131 483

Fig 3

Fig.4

0 131 483

Fig.5

Fig.6

Fig. 7